# EUROPEAN PATENT APPLICATION

(11) **EP 4 461 771 A2**
(43) Date of publication of application: **13.11.2024**
(21) Application number: 24197510.1
(22) Date of filing: 29.09.2021
(51) Int. Cl.: C08L 63/00

(54) **PUMPABLE AND THERMALLY EXPANDABLE FILLER COMPOSITIONS WITH PROLONGED OPEN TIME**

(30) Priority: 30.09.2020 EP 20199280
(62) Divisional of application: 21783000.9
(71) Applicant: Sika Technology AG, 6340 Baar (CH)
(72) Inventor: VOCI, Antonio, 8050 Zürich (CH); HALTINER, Sara, 8952 Schlieren (CH); ROSENAU, Carl Philipp, 8046 Zürich (CH)
(74) Representative: Sika Patent Attorneys

(57) **Abstract**

The present application is directed to pumpable thermally foaming filler compositions based on combinations of a liquid epoxy resin and a polyvinyl chloride resin and/or an acrylic resin powder and at least one alkali metal salt of a fatty acid containing 16 C-atoms or 18 C-atoms, wherein the alkali metal is calcium or zinc. These pumpable filler materials provide the advantage that they can be expanded to provide foam with high expansion values after humidity exposure/storage.

The present invention further describes methods for filling closed spaces with the pumpable thermally foaming filler composition as well as vehicle parts which are obtainable with the indicated methods.

## Description

### Technical field

The present invention relates to a pumpable thermally foaming filler composition and in particular relates to a pumpable thermally foaming filler composition which is suitable for forming an insulation material for blocking noise during the operation of a vehicle when charged into closed sections of vehicle body members such as a pillar of a vehicle and then foamed by the heat of a baking process.

### Background art

Heretofore in order to improve the insulation properties of automobiles against noise and in particular to block wind noise two component pumpable polyurethanes and other materials have been used which are foamed into a pre-determined shape beforehand and then inserted into closed sections such as a front pillar (A pillar), a centre pillar (B pillar), a rear pillar (C pillar), a wheel arch (tire house) or a side sill. However, this method is difficult to implement in automotive OEMs due to the complexities of application equipment and application process. Some small area cavities could not be accessed with applicators.

Another type of an insulation/enforcing material is a part baffle which can manually be applied to an automobile part in an unfoamed state and be foamed and expanded during the OEM bake process. These thermoplastic baffles include commercial products such as SikaBaffle 255 or SikaBaffle 450, which can be expanded to about 1000 to 2000 % of their volume prior to foaming.

A yet further type of isolation/enforcing material is a tape baffle, such as SikaBaffle 229, which exhibits a volume expansion of about 800%. The downside of the above-described part or tape baffle technologies is that the materials have to be applied manually. Robot applications are more desirable in OEMs.

A new approach to overcome the difficulties associated with pre-foamed insulation baffles is to use pumpable baffle materials which can be applied and metered by means of an injection nozzle and thus can be easily used "according to the requirements". For example, EP3281970 discloses a pumpable thermally foaming filler compositions based on combinations of a liquid epoxy resin and a polyvinyl chloride resin and/or an acrylic resin powder. These pumpable filler materials provide the advantage that they can be applied as needed using conventional injection equipment and can be expanded to provide foam with good physical strength, high expansion and good adhesion on oiled metal substrates. However, once the filler composition is applied on the substrate, it is exposed to humidity (moisture) and the material can absorb the humidity until it is finally cured. The time between application and curing is called open time. The absorbed water in the product can negatively influence the expansion of these compositions.

The present application addresses these problems.

### Description of the invention

In a first aspect, the present application is directed at a pumpable thermally foaming filler composition comprising:
- a liquid epoxy resin, preferably in an amount of 8 to 30 wt.-%, 10 to 25 wt.-%, preferably 15 to 20 wt.-%, based on the total weight of the pumpable thermally foaming filler composition;
- a polyvinylchloride resin and/or acrylic resin powder, preferably a polyvinylchloride resin; preferably 5 to 40 wt.-%, 8 to 30 wt.-%, preferably 10 to 20 wt.-%, based on the total weight of the pumpable thermally foaming filler composition;
- a foaming agent, preferably 1 to 10 wt.-%, 2 to 8 wt.-%, preferably 3 to 6 wt.-%, based on the total weight of the pumpable thermally foaming filler composition; and
- 1 to 5 wt.-%, based on the total weight of the pumpable thermally foaming filler composition, of at least one alkali metal salt of a fatty acid **AMS** containing 16 C-atoms or 18 C-atoms, wherein the alkali metal is calcium or zinc.

The pumpable thermally foaming filler composition comprises 1 to 5 wt.-%, based on the total weight of the pumpable thermally foaming filler composition, of at least one alkali metal salt of a fatty acid **AMS** containing 16 C-atoms or 18 C-atoms, wherein the alkali metal is calcium or zinc.

Surprisingly, it was found that mentioned alkali metal salt of said fatty acid **AMS** in the indicated amount lead to higher expansion values after humidity storage. Amounts lower than 1 wt.-% lead to insufficient expansion values. This is seen for example in the comparison of Ex.1-Ex.3 vs. Ex.4-Ex.9, vs. Ex.10-Ex.11 respectively. Different metal ions as well as different fatty acids, respectively calcium carbonate coated with stearic acid, do not lead to sufficient expansion values after humidity storage as seen for example in the comparison of Ex.4-Ex.11 vs. Ex.12-Ex.17.

Preferably, the at least one alkali metal salt of a fatty acid **AMS** containing 16 C-atoms or 18 C-atoms, wherein the alkali metal is calcium or zinc, is selected from the group consisting of
calcium salt of a saturated fatty acid containing 16 C-atoms, calcium salt of an unsaturated fatty acid containing 16 C-atoms, calcium salt of a saturated fatty acid containing 18 C-atoms, calcium salt of an unsaturated fatty acid containing 18 C-atoms,
zinc salt of a saturated fatty acid containing 16 C-atoms, zinc salt of an unsaturated fatty acid containing 16 C-atoms, zinc salt of a saturated fatty acid containing 18 C-atoms and zinc salt of an unsaturated fatty acid containing 18 C-atoms.

More preferably, the at least one alkali metal salt of a fatty acid **AMS** containing 16 C-atoms or 18 C-atoms, wherein the alkali metal is calcium or zinc, is selected from the group consisting of
calcium salt of palmitic acid, calcium salt of palmitoleic acid, calcium salt of sapienic acid, calcium salt of stearic acid, calcium salt of oleic acid, calcium salt of elaidic acid, calcium salt of vaccenic acid, calcium salt of linoleic acid, calcium salt of linoelaidic acid, calcium salt of α-linoleic acid,
zinc salt of palmitic acid, zinc salt of palmitoleic acid, zinc salt of sapienic acid, zinc salt of stearic acid, zinc salt of oleic acid, zinc salt of elaidic acid, zinc salt of vaccenic acid, zinc salt of linoleic acid, zinc salt of linoelaidic acid and zinc salt of α-linoleic acid.

Most preferably, the at least one alkali metal salt of a fatty acid **AMS** containing 16 C-atoms or 18 C-atoms, wherein the alkali metal is calcium or zinc, is selected from the group consisting of calcium salt of palmitic acid, calcium salt of stearic acid, calcium salt of oleic acid, calcium salt of linoleic acid, zinc salt of palmitic acid, zinc salt of stearic acid, zinc salt of oleic acid and zinc salt of linoleic acid.

Most preferably, the at least one alkali metal salt of a fatty acid **AMS** containing 16 C-atoms or 18 C-atoms, wherein the alkali metal is calcium or zinc, is selected from the group consisting of calcium salt of stearic acid and zinc salt of stearic acid, most preferably calcium salt of stearic acid.

It can be advantageous if the at least one alkali metal salt of a fatty acid **AMS** containing 16 C-atoms or 18 C-atoms is a calcium metal salt. Preferably selected from the group consisting of calcium salt of palmitic acid, calcium salt of stearic acid, calcium salt of oleic acid and calcium salt of linoleic acid, most preferably calcium salt of stearic acid. This is advantageous with respect to a buckle free and closed pore structure of the foamed filler after humidity storage as seen in table 3, for example in the comparison of Ex.4-Ex.9 vs. Ex.10-Ex.11

It can also be advantageous if the at least one alkali metal salt of a fatty acid **AMS** containing 16 C-atoms or 18 C-atoms is a zinc metal salt. Preferably selected from the group consisting of zinc salt of palmitic acid, zinc salt of stearic acid, zinc salt of oleic acid and zinc salt of linoleic acid, most preferably zinc salt of stearic acid. This is advantageous with respect to higher expansion values after humidity storage as seen in table 3, for example in the comparison of Ex.10-Ex.11 vs. Ex.4-Ex.9.

Preferably, the amount of alkali metal salt of a fatty acid **AMS,** based on the total weight of the pumpable thermally foaming filler composition, is 1.25 to 4 wt.-%, preferably 1.5 to 3 wt.-%, more preferably 1.75 to 2.5 wt.-%, most preferably 1.85 to 2.25 wt.-%.

This is advantageous with respect to higher expansion values after humidity storage as seen in table 3.

The liquid epoxy resin is a material which is liquid or at least flowable at ambient temperature (23°C). Polyepoxides which are known to the person skilled in the art as "reactive diluents" are also referred to in the present document as liquid epoxy resins.

Suitable liquid epoxy resins for use in the inventive composition include liquid resins of the formula (I) 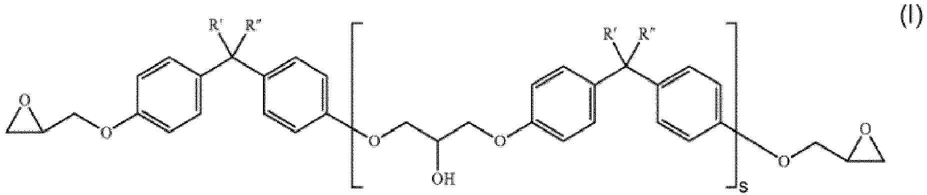 where R' and R" are each independently a hydrogen atom or a methyl group, and s has an average value of 0 to 1. Preference is given to those liquid resins of the formula (I) in which the index s has an average value of less than 0.2.

The liquid epoxy resins of the formula (I) are diglycidyl ethers of bisphenol A, bisphenol F and bisphenol A/F, where A represents acetone and F formaldehyde, which serve as reactants for preparation of these bisphenols. A bisphenol A liquid resin accordingly has methyl groups, a bisphenol F liquid resin hydrogen atoms, and a bisphenol A/F liquid resin both methyl groups and hydrogen atoms, as R' and R" in formula (I). In the case of bisphenol F, it is also possible for positional isomers to be present, especially derived from 2,4'- and 2,2'-hydroxyphenyl methane.

Such liquid epoxy resins are commercially available, for example as Araldite^{®} GY 204, Araldite^{®} GY 250, Araldite^{®} GY 260, Araldite^{®} GY 281 , Araldite^{®} GY 282, Araldite^{®} GY 285, Araldite^{®} PY 304, Araldite^{®} PY 720 (from Huntsman); D.E.R.^{®} 330, D.E.R.^{®} 331 , D.E.R.^{®} 332, D.E.R.^{®} 336, D.E.R.^{®} 354, D.E.R.@ 351 , D.E.R.^{®} 352, D.E.R.^{®} 356 (from Dow); Epikote^{®} 162, Epikote^{®} 827, Epikote^{®} 828, Epikote^{®} 158, Epikote^{®} 862, Epikote^{®} 169, Epikote^{®} 144, Epikote^{®} 238, Epikote^{®} 232, Epikote^{®} 235 (from Hexion), Epalloy^{®} 7190, Epalloy^{®} 8220, Epalloy^{®} 8230, Epalloy^{®} 7138, Epalloy^{®} 7170, Epalloy^{®} 9237-70 (from CVC), Chem Res^{®} E 20, Chem Res^{®} E 30 (from Cognis), Beckopox^{®} EP 1 16, Beckopox^{®} EP 140 (from Cytec), Epiclon EXA-4850 (from Sun Chemical).

Further suitable liquid epoxy resins are the glycidylization products of dihydroxybenzene derivatives such as resorcinol, hydroquinone and catechol; further bisphenols or polyphenols such as bis(4-hydroxy-3-methylphenyl)methane, 2,2-bis(4-hydroxy-3-methylphenyl)propane (bisphenol C), bis(3,5-dimethyl-4-hydroxyphenyl)methane, 2,2-bis(3,5-dimethyl-4-hydroxyphenyl)propane, 2,2-bis(3,5-dibromo-4-hydroxy-phenyl)propane, 2,2-bis(4-hydroxy-3-tert-butyl-phenyl)propane, 2,2-bis(4-hydroxyphenyl)butane (bisphenol B), 3,3-bis(4-hydroxyphenyl)pentane, 3,4-bis(4-hydroxyphenyl)hexane, 4,4-bis(4-hydroxyphenyl)-heptane, 2,4-bis(4- hydroxyphenyl)-2-methylbutane, 2,4-bis(3,5-dimethyl-4-hydroxyphenyl)-2-methylbutane, 1,1-bis(4-hydroxyphenyl)cyclohexane (bisphenol Z), 1,1-bis(4-hydroxyphenyl)-3,3,5-trinnethylcyclohexane (bisphenol TMC), 1,1-bis(4-hydroxyphenyl)-1-phenyl-ethane, 1,4-bis[2-(4-hydroxyphenyl)-2-propyl]benzene) (bisphenol P), 1,3-bis[2-(4-hydroxyphenyl)-2-propyl]benzene) (bisphenol M), 4,4'-dihydroxydiphenyl (DOD), 4,4'-dihydroxybenzophenone, bis(2-hydroxynaphth-1-yl)methane, bis(4-hydroxynaphth-1-yl)methane, 1,5-dihydroxynaphthalene, tris(4-hydroxyphenyl)nnethane, 1,1,2,2-tetrakis(4-hydroxyphenyl)ethane, bis(4-hydroxyphenyl)ether, bis(4-hydroxyphenyl) sulfone; condensation products of phenols with formaldehyde, which are obtained under acidic conditions, such as phenol novolacs or cresol novolacs; aromatic amines, such as aniline, toluidine, 4-aminophenol, 4,4'-methylenediphenyldiamine (MDA), 4,4'-methylenediphenyldi(N-methyl)amine, 4,4'-[1,4-phenylenebis(1 - methylethylidene)]bisaniline (bisaniline P), 4,4'-[1,3- phenylenebis(1 - methylethylidene)]bisaniline (bisaniline M).

In a further embodiment, the liquid epoxy resin is an aliphatic or cycloaliphatic polyepoxide, for example diglycidyl ether; a glycidyl ether of a saturated or unsaturated, branched or unbranched, cyclic or open-chain C2 to C3 diol, for example ethylene glycol, propylene glycol, butylene glycol, hexanediol, octanediol, a polypropylene glycol, dimethylolcyclohexane, neopentyl glycol; a glycidyl ether of a tri- or tetrafunctional, saturated or unsaturated, branched or unbranched, cyclic or open-chain polyol such as castor oil, trimethylolpropane, trimethylolethane, penta-erythritol, sorbitol or glycerol, and alkoxylated glycerol or alkoxylated trimethylolpropane; a hydrogenated bisphenol A, F or A/F liquid resin, or the glycidylization products of hydrogenated bisphenol A, F or A F; an N-glycidyl derivative of amides or heterocyclic nitrogen bases, such as triglycidyl cyanurate and thglycidyl isocyanurate, and reaction products of epichlorohydrin and hydantoin.

Aliphatic or cycloaliphatic liquid epoxy resins are, for example, commercially available as Araldite^{®} DY-C, Araldite^{®} DY-F, Araldite^{®} DY-H, Araldite^{®} DY-T, Araldite^{®} DY 0397, Araldite^{®} DY 3601 (from Huntsman), D.E.R.^{®} 732, D.E.R.@ 736 (from Dow); Heloxy^{®} BD, Heloxy^{®} HD, Heloxy^{®} TP, Epikote^{®} 877 (from Hexion), Beckopox^{®} EP 075 (from Cytec). Mixtures of aliphatic or cycloaliphatic polyepoxides and aromatic epoxides of the formula (I) can also be used, such is in particular mixtures of diglycidyl ethers of bisphenol A, bisphenol F and bisphenol A/F and diglycidylethers of α,ω-alkandiols, wherein the α,ω-alkandiols preferably comprise 2 to 10 carbon atoms. Such mixtures are commercially available for example from Dow as D.E.R. 358.

In a further embodiment, the liquid epoxy resin is a polyepoxide which has been prepared from the oxidation of olefins, for example from the oxidation of vinylcyclohexene, dicyclopentadiene, cyclohexadiene, cyclododecadiene, cyclododecatriene, isoprene, 1,5-hexadiene, butadiene, polybutadiene or divinylbenzene.

The liquid epoxy resin is preferably a liquid resin of the formula (I) as described above, more preferably the versions thereof described as preferred above.

A particular preferred liquid epoxy resin in the context of the present application is an epoxy resin based on bisphenol A diglycidylether having an epoxy equivalent weight of 156 to 250 g/eq, such as D.E.R.^{®} 331 from Dow.

The liquid epoxy resins are preferably included into the composition in an amount of 5 to 40 wt.-% based on the total weight of the composition. In a yet preferred embodiment, the liquid epoxy resin is incorporated into the composition in an amount of 8 to 30 wt.-%, 10 to 25 wt.-% and in particular 15 to 20 wt.-%.

The polyvinylchloride (PVC) resin in the composition of the present application can be a polyvinylchloride homo- or a copolymer, preferably a polyvinylchloride copolymer. If the polyvinylchloride is a copolymer, it preferably comprises vinyl esters such as vinyl acetate or vinyl propionate as the comonomer to vinylchloride. The amount of the co-monomer preferably ranges from 1 to 25%, more typically is in the range of from 2 to 20%, 2 to 15%, 2 to 10% and most preferably 3 to 7%, relative to the total weight of the copolymer.

A suitable PVC-homopolymer in the context of the present application is Formolon KVH from Formosa. A particularly suitable PVC copolymer in the context of the present application is Formolon F40 also from Formosa.

The acrylic resin powder, which may be used instead or in addition to the polyvinyl chloride resin, is not particularly limited, except that it is preferably solid at ambient temperature (23°C). More preferably, the acrylic resin powder has a glass transition temperature Tg in the range of 50°C to 120°C and even more preferably in the range of 70°C to 90°C. The glass transition temperature is determined by DSC. In addition, it is preferred that the acrylic resin powder is capable of forming a plastisol.

The acrylic resin in the acrylic resin powder may be a homopolymer or a copolymer. A preferred acrylic resin is a resin based on methylmethacrylate, such as those available as Dianal LP-3106 or Dianal LP-3202 for Dianal America Inc. Another commercially available acrylic resin which can be used with advantage in the present application is Kane Ace U506 from Kaneka.

The polyvinyl chloride resin or resins and/or the acrylic resin powder or powders are suitably included into the composition in an amount ranging from 5 to 40 wt.-%, preferably in an amount of 8 to 30 wt.-% and most preferably in an amount of from 10 to 20 wt.-%.

As a third mandatory ingredient, the inventive pumpable thermally foaming filler composition comprises a foaming agent. As the foaming agent for use in the invention, any substance may be used in so far as it decomposed by heating to generate a gas. As suitable foaming agents azo-compounds such as azodicarbonamide, nitroso compounds such as N,N-dinitrosopentamethylene tetramine and hydrazine derivatives such as diphenyl sulphone-3,3'-disulphohydrazide can be mentioned. These foaming agents may be used as one kind or as a mixture of two or more kinds thereof. In the context of the present application, dicyandiamide is particularly preferred as at least part of the foaming agent, because the degradation product thereof (ammonia) can aid the curing and crosslinking of the liquid epoxy resin.

The amount of the foaming agent in the pumpable thermally foaming filler composition of the invention is typically in the range of 1 to 10 wt.-%, 2 to 8 wt.-% and preferably in the range of 3 to 6 wt.-%.

The characteristic "pumpable" of the thermally foaming filler composition of the present application is understood such, that at ambient temperature (20°C) the filler has a viscosity which is suitable for pumping and preferably has a paste-like viscosity. The viscosity of the pumpable thermally foaming filler composition is usually in the range of 50 to 500 Pa.s and preferably 100 to 300 Pa.s, when measured by means of a rheometer with heatable plate (MCR 301, AntonPaar) (gap 1000 µm, measuring plate diameter: 25 mm (plate/plate), deformation 0.01-10 % at 5 Hz, temperature: 20°C). When the viscosity is lower than 50 Pa.s, dripping can more easily occur and the shape cannot sufficiently be maintained during processing. If on the other hand, the viscosity exceeds 500 Pa.s, the workability of the material is greatly reduced.

Next to the ingredients mentioned above, the pumpable thermally foaming filler composition may contain additional ingredients.

In a preferred embodiment, the pumpable thermally foaming filler composition thus contains a rubber, in particular a synthetic rubber and preferably a partially crosslinked synthetic rubber. Exemplarily partially crosslinked rubbers for use in the inventive filler composition are preferably partially crosslinked diene rubbers, more preferably selected from the group consisting of acrylonitrile-isoprene copolymer rubber (NIR), acrylonitrile-butadiene copolymer rubber (NBR), styrene-butadiene copolymer rubber (SBR), a butadiene rubber (BR) and isoprene rubber (IR). The crosslinking may be the results of the addition of a crosslinking agent, such as divinyl benzene or sulphur. The addition of a rubber provides the advantages of improved rheological properties, sag resistance, wash-off resistance and a higher volume expansion of the resulting filler composition.

The rubber is typically incorporated into the inventive filler composition in amounts of from 1 to 20%, preferably 3 to 15 wt.-% and more preferably 5 to 10 wt.-%, relative to the total weight of the composition.

A further ingredient which can be used with advantage in the pumpable thermally foaming filler composition of the present application is a plastizicer. Therefore, the pumpable thermally foaming filler composition of the present application preferably comprises at least one plasticizer. The combination of low viscosity plasticizers and PVC and/or acrylic resin powder is advantageous for a stable paste-like state and advantageous for providing the cured material with good physical strength and good expansion rates especially after humidity storage.

As the plasticizer, any substance may be used insofar as the polyvinylchloride can be swollen and dissolved therein. Mentioned as plasticizers are, for example, phthalate esters such as di(2-ethylhexyl)phthalate, butyl benzyl phthalate, dinonylphthalate, diisononylphthalate (DIDP), diisodecylphthalate (DIDP), diundecylphthalate, ditridecylphthalate (DTDP), diheptylphthalate and butylphthalylbutylglycolate; aliphatic dibasic acid esters such as dioctyl adipate, didecyl adipate and dioctysebacate; polyglycolbenzoic acid esters such as polyoxyethylene glycol dibenzoate and polyoxypropylene glycol dibenzoate; phosphate esters such as tributylphosphate and tricresylphosphate; hydrocarbons such as alkyl-substituted diphenyl, alkyl-substituted terphenyl, partially hydrogenated terphenyl, aromatic processing oil and pile oil. These plasticizers may be used singly or as a mixture of two or more kinds thereof. Preferred among the afore-mentioned plasticizers in the context of the present application are phthalate esters, in particular diiosnonylphthalate (DIDP), ditridecylphthalate (DTDP) and Diisodecylphthalate (DIDP).

A suitable amount of plasticizer in the context of the present application is from 5 to 40 wt.-%, preferably from 10 to 30 wt.-%, 15 to 25 wt.-% and in particular 10 to 20 wt.-%, relative to the total weight of the composition.

The pumpable thermally foaming filler composition of the present application preferably also contains a curing agent for the liquid epoxy resin. As the curing agent, a latent curing agent is preferably used which provides curing by heating and can usually be activated at temperatures of between 80 to 250°C. Specific examples of the latent curing agent include dicyandiamide, 4,4'-diaminodiphenylsulphone, imidazol derivatives such as 2-N-heptadecylimidazol, iso-phthalic dihydrazide, N,N-dialkylurea derivatives, N,N-dialkyl thiourea derivatives and melamine derivatives. These curing agents may be used independently or as a mixture of two or more of them depending on the curing conditions and their properties. A particularly preferred curing agent for use in the context of the present application is dicyandiamide. In one preferred embodiment dicyandiamide is used as the sole epoxy curing agent in the composition, as it was observed that the combination of liquid epoxy resin and dicyandiamide provides mixtures which are very stable on storage.

The amount of the curing agent is preferably in the range of 0.05 to 2.0 wt.-%, 0.1 to 1.5 wt.-%, 0.2 to 1.2 wt.-%, 0.4 to 1.0 wt.-%, more preferably in the range of 0.5 to 0.8 wt.-%, relative to the total weight of the composition. It has been observed that a high level of the liquid epoxy resin combined with a small amount of curing agent provides a material which is crosslinked to a suitable extent once cured and provides good adhesion properties on oiled metal substrates. In addition, this system also gives good physical strength.

Next to the afore-mentioned ingredients, the pumpable thermally foaming filler composition of the present application in addition preferably comprises a filler, in particular an inorganic filler. Suitable inorganic fillers are for example calcium carbonate, silica, clay, and fly ash. These inorganic fillers may be used singly or as a mixture of two or more kinds thereof. It is also possible to use more than one modification of a filler such as e.g. different modifications of calcium carbonate.

The amount of fillers and in particular inorganic filler in the context of the present application is not particularly limited and depends on the viscosity of the composition without the filler (i.e., lower viscosity allows for a more filler to be incorporated whereas a higher viscosity without the filler only allows a low amount of filler to be incorporated) while maintaining the composition pumpable. The amount of a filler thus typically ranges from 10 to 55 wt.-%, preferably from 15 to 45 wt.-% and more preferably from 20 to 35 wt.-%, relative to the total weight of the composition.

The pumpable thermally foaming filler composition of the present application can in addition contain an appropriate amount of other additives as required, e.g., thixotropy imparting agents such as organic bentonite, fumed silica, castor oil derivatives, pigments such as carbon black, titanium dioxide, zinc dioxide or other inorganic pigments, dehydrating agents such as calcium oxide and powder silica gel and/or PVC-stabilizing agents.

The amount of these additional additives is not particularly limited, however it is preferred that content does not exceed 15 wt.-%, more preferably is 10 wt.-% or less and even more preferably is 8 wt.-% or less.

In a specifically preferred embodiment of the present application the pumpable thermally foaming filler composition of the present application comprises:
- 1 to 5 wt.-%, 1.25 to 4 wt.-%, 1.5 to 3 wt.-%, 1.75 to 2.5 wt.-%, preferably 1.85 to 2.25 wt.-%, based on the total weight of the pumpable thermally foaming filler composition, of at least one alkali metal salt of a fatty acid **AMS** containing 16 C-atoms or 18 C-atoms, wherein the alkali metal is calcium or zinc, preferably selected from the group consisting of calcium salt of palmitic acid, calcium salt of stearic acid, calcium salt of oleic acid, calcium salt of linoleic acid, zinc salt of palmitic acid, zinc salt of stearic acid, zinc salt of oleic acid and zinc salt of linoleic acid, more preferably selected from the group consisting of calcium salt of stearic acid and zinc salt of stearic acid, most preferably calcium salt of stearic acid,
- 8 to 30 wt.-%, 10 to 25 wt.-%, preferably 15 to 20 wt.-% of a liquid epoxy resin, preferably a liquid resin of the formula (I);
- 5 to 40 wt.-%, 8 to 30 wt.-%, preferably 10 to 20 wt.-%, of polyvinylchloride resins and/or acrylic resin powder, preferably polyvinylchloride resins;
- 1 to 20%, 3 to 15 wt.-%, preferably 5 to 10 wt.-%, of a rubber, preferably a synthetic rubber, more preferably a diene rubber;
- 1 to 10 wt.-%, 2 to 8 wt.-%, preferably 3 to 6 wt.-%, of a foaming agent;
- 5 to 40 wt.-%, 10 to 30 wt.-%, 15 to 25 wt.-%, preferably 10 to 20 wt.-%, of a plasticizer, preferably phthalate esters;
- 0.05 to 2.0 wt.-%, 0.1 to 1.5 wt.-%, 0.2 to 1.2 wt.-%, 0.4 to 1.0 wt.-%, preferably
- 0.5 to 0.8 wt.-%, of a curing agent, preferably a latent curing agent;
- 10 to 55 wt.-%, 15 to 45 wt.-%, preferably 20 to 35 wt.-%, of fillers, preferably inorganic fillers.

The above-mentioned wt.-% are based on the total weight of the composition.

The pumpable thermally foaming filler composition of the invention can be produced by mixing the ingredients mentioned above by a mixer. The type of the mixer to be used is not particularly limited and includes, for example, various mixers such as a planetary mixer and a kneader.

In a second aspect, the invention is directed at a foamed filler which is obtainable by heating the pumpable thermally foaming filler composition as described above to a temperature above the activating temperature of the foaming agent. Preferably, the temperature to which the pumpable thermally foaming filler composition is heated should not exceed 210°C and in particular should be in the range of 140 to 200°C and more preferably 155 to 200°C. Preferably the composition is heated for 10 to 60 min, preferably 15 to 15 min, more preferably 20 to 40 min, at beforementioned temperature.

In addition, it is preferred that the foamed filler has an expansion of 400% to 1000%, preferably 450% to 900%, relative to its volume in the unfoamed state, after humidity storage (3 d 40°C, 99% relative humidity) if cured at a temperature UB of 160°C for 25 min, preferably as described in the experimental section; and/or an expansion of 300% to 1000%, preferably 320% to 900%, more preferably 340% to 900%, relative to its volume in the unfoamed state, after humidity storage (3 d 40°C, 99% relative humidity) if cured at a temperature OB of 200 °C for 40 min, preferably as described in the experimental section.

The pumpable thermally foaming filler composition can be used with advantage to be applied (e.g. by extrusion) robotically into closed spaces and expanded therein to provide a foam which isolates from noise. Therefore, in one aspect the present invention is also directed at a use of the pumpable thermally foaming filler composition as described above as a filler for closed spaces and in particular as a filler for closed spaced in vehicle parts. The pumpable thermally foaming filler composition is suitably used for the formation of an isolation wall in the closed spaces in which noise such as a wind noise arises during the operation of a car. Such closed spaces include in particular a front pillar (A pillar), a centre pillar (B pillar), a rear pillar (C pillar), a wheel arch (tire house) and a side sill.

The present application in a further embodiment is directed at a method for filling a closed space comprising the steps of
- a) applying a pumpable thermally foaming filler composition as described above into a closed space, and
- b) heating the closed space with the pumpable thermally foaming filler composition to a temperature above the activation temperature of the foaming agent to foam the filler.

Preferably, the pumpable thermally foaming filler composition in step b) is heated to a temperature of 140 to 200°C and more preferably 155 to 200°C. Preferably the composition is heated for 10 to 60 min, preferably 15 to 15 min, more preferably 20 to 40 min, at beforementioned temperature.

Preferably, after step a) the applied pumpable thermally foaming filler composition is exposed for more than 2 days, more than 10 days, more preferably more than 30 days, to a temperature of ≥30°C and ≥80% relative humidity, more preferred to a temperature of ≥40°C and ≥90% relative humidity, before step b) is performed.

For preferred embodiments of pumpable thermally foaming filler composition and the closed space in this method the abovementioned statements apply analogously.

Since the method is particularly useful in automobile fabrication, it is preferred for the method that the closed space is a closed space in a vehicle part. Moreover, it is preferred that the closed space has a metal surface and in particular an oily metal surface.

In a yet further embodiment, the present application is directed at a vehicle part which is obtainable by the above-described method.

The pumpable thermally foaming filler composition of the present application provides good expansion rates after humidity storage and thus significantly improves noise vibration harshness in a vehicle.

### Examples

Each ingredient was compounded according to the compounding amount shown in Table 1 (Basis formulation). The Premix contains 12.9 wt.-% Styrene-Butadiene rubber, 26.8 wt.-% DIDP plasticizer, 39.9 wt.-% calcium carbonate filler and 20.4 wt.-% liquid epoxy resin (based on bisphenol A/epichlorhydrin with an epoxy equivalent weight of 180 to 190 g/eq). For the compositions Ex.2-Ex.17 shown in table 3, the indicated amount of metal salt or coated calcium carbonate was added by removing the corresponding amount of calcium carbonate from the basis formulation. For example, for the composition Ex.8, 2.0 wt.-% of CaSt, based on the total amount of the basis formulation, was added to the basis formulation. At the same time, 2.0 wt.-% of calcium carbonate, based on the total amount of the basis formulation, was removed to the basis formulation. Hence the composition Ex.8 contains 0.5 wt.-% of calcium carbonate and 2.0 wt.-% of CaSt, both based on the total weight of the composition Ex.8.

**Table 1, All amounts are in parts by weight**

| | Basis formulation |
|---|---|
| Premix | 66 |
| DIDP plasticizer | 4.2 |
| PVC stabilizer | 1.5 |
| PVC-co-stabilizer | 1 |
| DER 331 liquid epoxy | 5.0 |
| PVC copolymer | 15 |
| Foaming agent | 3.2 |
| Dicyandiamide | 0.6 |
| Zinc oxide | 1.0 |
| Calcium carbonate | 2.5 |

**Table 2**

| | |
|---|---|
| CaSt | Calcium salt of stearic acid, Ligastar CA 350, Peter Greven (Germany) |
| NaSt | Sodium salt of stearic acid, Herwemag S, Herwe (Germany) |
| MgSt | Magnesium salt of stearic acid, Herwemag M, Herwe (Germany) |
| AlSt | Aluminium salt of stearic acid, Ligastar AL TR, Peter Greven (Germany) |
| ZnSt | Zinc salt of stearic acid, Herwemag ZV-HS, Herwe (Germany) |
| Ca La | Calcium salt of lauric acid, Ligastab CAL, Peter Greven (Germany) |
| Ca C12-C18 | Calcium soap, C12-C18, Ligaphob CA6 Plus, Peter Greven (Germany) |
| CaCo₃ C | Calcium carbonate coated with stearic acid, Winnofil S.P.T., Solvay |

The obtained paste-like filler compositions were evaluated for volume change under different bake-conditions.

### Expansion in %

The Expansion is quantified for each sample by measuring the density of a bead of test material with approximately 5 mm radius and a length of 50 mm before and after expansion. The densities were determined according to DIN EN ISO 1183 using the water immersion method (Archimedes principle) in deionized water and a precision balance to measure the mass. For testing the expansion (Initial Expansion) before humidity storage, the test materials were expanded at 160°C for 25 minutes (under bake = UB), 180°C for 20 minutes (normal bake = NB) and 200°C for 40 minutes (over bake = OB), respectively.

In parallel, samples were stored for 3 days at 40°C in 99% relative humidity (3 days 40°C/99%rh.) The stored samples were than stored for 1 hour at 23 °C in 50% relative humidity and the expansion was determined (Expansion after 3 d 40°C 99%rh). The test materials were as well expanded at 160°C for 25 minutes (under bake = UB), 180°C for 20 minutes (normal bake = NB) and 200°C for 40 minutes (over bake = OB), respectively.

**Table 3, n.d. = not determined, B*=buckling, OPS**=open pore structure**

| | Metal salt | Amount (wt.-) | B* | OPS** | Initial Expansion [%] | | | Expansion [%] after 3 d 40°C 99% | | |
|---|---|---|---|---|---|---|---|---|---|---|
| | | | | | UB | NB | OB | UB | NB | OB |
| Ex.1 | none | none | no | no | 861 | 840 | 761 | 311 | 332 | 310 |
| Ex.2 | CaSt | 0.5 | yes | no | 805 | 340 | 823 | 374 | 677 | 240 |
| Ex.3 | CaSt | 0.75 | no | no | 781 | 352 | 773 | 415 | 660 | 244 |
| Ex.4 | CaSt | 1.0 | no | no | 815 | 495 | 810 | 450 | 764 | 306 |
| Ex.5 | CaSt | 1.25 | no | no | 768 | 415 | 807 | 450 | 799 | 315 |
| Ex.6 | CaSt | 1.5 | no | no | 793 | 414 | 785 | 460 | 710 | 320 |
| Ex.7 | CaSt | 1.75 | no | no | 758 | 440 | 850 | 490 | 645 | 340 |
| Ex.8 | CaSt | 2.0 | no | no | 751 | 769 | 748 | 465 | n.d. | 380 |
| Ex.9 | CaSt | 2.5 | no | no | 755 | 450 | 772 | 490 | 685 | 340 |
| Ex.10 | ZnSt | 1.5 | yes | yes | 898 | 855 | 669 | 750 | 715 | 530 |
| Ex.11 | ZnSt | 2.0 | yes | yes | 810 | 839 | 643 | 790 | 760 | 595 |
| Ex.12 | NaSt | 2.0 | no | no | 657 | 629 | 506 | 247 | 244 | 154 |
| Ex.13 | MgSt | 2.0 | no | no | 757 | 695 | 574 | 307 | 286 | 198 |
| Ex.14 | AlSt | 2.0 | no | no | 840 | 734 | 553 | 273 | 303 | 267 |
| Ex.15 | Ca La | 2.0 | no | no | 721 | 743 | 638 | 376 | 334 | 252 |
| Ex.16 | Ca C12-C18 | 2.0 | no | no | 697 | 669 | 589 | 175 | 161 | 150 |
| Ex.17 | CaCo3 C | 2.0 | no | no | 854 | 815 | 665 | 290 | 290 | 310 |

As shown in Table 3, the pumpable thermally foaming filler composition of the invention shows good expansion values after humidity storage. It was further found that the compositions Ex.10 and Ex.11 containing ZnSt showed an open pore structure on the surface of the cured composition after expansion after humidity storage.

It was also found that the compositions Ex. 2, Ex.10 and Ex.11 showed slight twists and distortions in the expanded material, known as "buckling", after expansion after humidity storage.

## Claims

1. A pumpable thermally foaming filler composition comprising:
- a liquid epoxy resin, preferably in an amount of 8 to 30 wt.-%, 10 to 25 wt.-%, preferably 15 to 20 wt.-%, based on the total weight of the pumpable thermally foaming filler composition;
- a polyvinylchloride resin and/or acrylic resin powder, preferably a polyvinylchloride resin; preferably 5 to 40 wt.-%, 8 to 30 wt.-%, preferably 10 to 20 wt.-%, based on the total weight of the pumpable thermally foaming filler composition;
- a foaming agent, preferably 1 to 10 wt.-%, 2 to 8 wt.-%, preferably 3 to 6 wt.-%, based on the total weight of the pumpable thermally foaming filler composition; and
- 1 to 5 wt.-%, based on the total weight of the pumpable thermally foaming filler composition, of at least one alkali metal salt of a fatty acid **AMS** containing 16 C-atoms or 18 C-atoms, wherein the alkali metal is calcium or zinc.

2. The pumpable thermally foaming filler composition of claim 1 wherein the amount of alkali metal salt of a fatty acid **AMS** is 1.25 to 4 wt.-%, preferably 1.5 to 3 wt.-%, more preferably 1.75 to 2.5 wt.-%, most preferably 1.85 to 2.25 wt.-%, based on the total weight of the pumpable thermally foaming filler composition.

3. The pumpable thermally foaming filler composition of claim 1 or 2 wherein the alkali metal salt of a fatty acid **AMS** is selected from the group consisting of calcium salt of palmitic acid, calcium salt of stearic acid, calcium salt of oleic acid and calcium salt of linoleic acid, preferably calcium salt of stearic acid.

4. The pumpable thermally foaming filler composition of claim 1 or 2 wherein the alkali metal salt of a fatty acid **AMS** is selected from the group consisting of zinc salt of palmitic acid, zinc salt of stearic acid, zinc salt of oleic acid and zinc salt of linoleic acid, preferably zinc salt of stearic acid.

5. The pumpable thermally foaming filler composition of anyone of the preceding claims, **characterized in that** the liquid epoxy resin is of the formula (I) 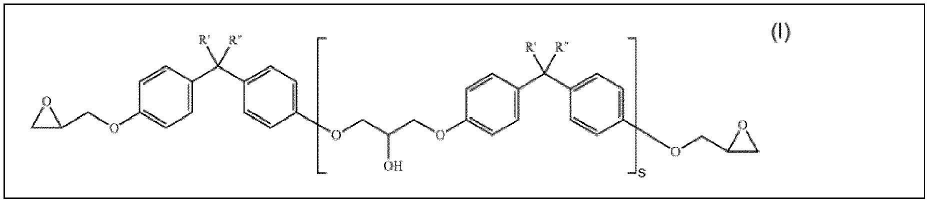 where R' and R" are each independently a hydrogen atom or a methyl group and s has an average value of 0 to 1, preferably of less than 0.2.

6. The pumpable thermally foaming filler composition of anyone of the preceding claims further comprising a rubber, preferably a synthetic rubber, more preferably a partially crosslinked synthetic rubber and more preferably a diene rubbers, preferably in an amount from 1 to 20%, preferably 3 to 15 wt.-% and more preferably 5 to 10 wt.-%, relative to the total weight of the composition.

7. The pumpable thermally foaming filler composition of anyone of the preceding claims further comprising at least one plasticizer, preferably phthalate esters, preferably in an amount of 5 to 40 wt.-%, preferably from 10 to 30 wt.-%, 15 to 25 wt.-% and in particular 10 to 20 wt.-%, based on the total weight of the pumpable thermally foaming filler composition.

8. The pumpable thermally foaming filler composition of anyone of the preceding claims further comprising a curing agent, preferably a latent curing agent, more preferably dicyandiamide, for the liquid epoxy resin, preferably in an amount of 0.05 to 2.0 wt.-%, 0.1 to 1.5 wt.-%, 0.2 to 1.2 wt.-%, 0.4 to 1.0 wt.-%, more preferably in the range of 0.5 to 0.8 wt.-%, based on the total weight of the pumpable thermally foaming filler composition.

9. The pumpable thermally foaming filler composition of anyone of the preceding claims further comprising one or more fillers, preferably inorganic fillers, preferably in an amount of 10 to 55 wt.-%, preferably from 15 to 45 wt.-% and more preferably from 20 to 35 wt.-%, based on the total weight of the pumpable thermally foaming filler composition.

10. The foamed filler obtainable by heating the pumpable thermally foaming filler composition of anyone of claims 1 to 9 to a temperature above the activation temperature of the foaming agent.

11. The filler of claim 10 having an expansion of 400% to 1000%, preferably 450% to 900%, relative to its volume in the unfoamed state, after humidity storage for 3 days at 40°C with 99% relative humidity if cured at a temperature of 160°C for 25 min; and an expansion of 300% to 1000%, preferably 320% to 900%, more preferably 340% to 900%, relative to its volume in the unfoamed state, after humidity storage for 3 days at 40°C with 99% relative humidity if cured at a temperature of 200°C for 40 min.

12. Use of the pumpable thermally foaming filler composition according to any one of claims 1 to 9 as a filler for closed spaces, in particular as a filler for closed spaces in vehicle parts.

13. A method for filling a closed space comprising the steps of
- inserting a pumpable thermally foaming filler composition according to any one of claims 1 to 9 into a closed space, and
- heating the closed space with the pumpable thermally foaming filler composition to a temperature above the activation temperature of the foaming agent to foam the filler.

14. The method of claim 13, wherein the closed space is a closed space in a vehicle part.

15. A vehicle part which is obtainable by the method of claims 13 or 14.
